# EUROPÄISCHE PATENTANMELDUNG

(11) **EP 4 714 513 A1**
(43) Veröffentlichungstag der Anmeldung: **25.03.2026**
(21) Anmeldenummer: 25196888.9
(22) Anmeldetag: 20.08.2025
(51) Int. Cl.: A63F 13/28, A63F 13/803, B60R 11/04, B60W 40/08

(54) **VERFAHREN ZUM STEUERN MINDESTENS EINER AKTUATOREINRICHTUNG EINES KRAFTFAHRZEUGS, STEUERVORRICHTUNG, UND KRAFTFAHRZEUG**

(30) Priorität: 20.09.2024 DE 102024127181
(71) Anmelder: AUDI Aktiengesellschaft, 85057 Ingolstadt (DE)
(72) Erfinder: Belz, Karsten, 85051 Ingolstadt (DE)
(74) Vertreter: Hofstetter, Schurack & Partner

(57) **Zusammenfassung**

Die Erfindung betrifft ein Verfahren zum Steuern mindestens einer Aktuatoreinrichtung (28) eines Kraftfahrzeugs (10), wobei eine Steuervorrichtung (12) einen Benutzer (24) des Kraftfahrzeugs (10) feststellt (S1), mindestens einen Verhaltens- und/oder Körperspracheparameter des Benutzers (24) feststellt (S2), und den mindestens einen festgestellten Benutzer (24) anhand des festgestellten Verhaltens- und/oder Körperspracheparameter einer von mehreren vorgegebenen Spieler-Kategorien zuordnet (S5). Die Steuervorrichtung (12) ermittelt anhand der Spieler-Kategorie des mindestens einen festgestellten Benutzers (24) ein der benutzerspezifischen Spieler-Kategorie zugeordnetes Set an Aktuatorparametern für mindestens eine Aktuatoreinrichtung (28) des Kraftfahrzeugs (10) (S6), erzeugt bei Feststellen eines Startens eines Computerspiels im Kraftfahrzeug (10) ein Aktuatorsignal (S7), das das ermittelte Set an Aktuatorparametern beschreibt, und überträgt das erzeugte Aktuatorsignal an die mindestens eine Aktuatoreinrichtung (28) (S8). Die Erfindung betrifft auch die Steuervorrichtung (12) und das Kraftfahrzeug (10).

## Beschreibung

Die Erfindung betrifft ein Verfahren zum Steuern mindestens einer Aktuatoreinrichtung eines Kraftfahrzeugs. Die Erfindung betrifft auch die Steuervorrichtung und das Kraftfahrzeug.

Heutige Fahrzeuge werden in Zukunft immer mehr autonom fahren können. Deswegen kann der Passagier sich auch anderen Dingen im Fahrzeug widmen. Unter anderem hält hier auch das "Gaming" Einzug in den Fahrzeuginnenraum, also das Spielen von Computerspielen.

Die WO 2020/163801 A1 beschreibt einen intelligenten Medienplayer, der unter Verwendung programmierter Methoden interaktive Medien konfiguriert, die speziell auf die Passagiere zugeschnitten sind, die vorübergehend ein gemeinsames Transportmittel (zum Beispiel ein Auto oder ein anderes Fahrzeug) nutzen.

Aus der US 2022/0224963 A1 sind Methoden und Geräten zum Personalisieren eines Fahrzeugs mit einem Sensorausgabegerät bekannt, zu denen gehört: das Empfangen eines Signals durch einen oder mehrere Prozessoren, das die Identität oder das Passagierprofil eines erkannten Passagiers angibt, der sich im Fahrzeug befindet oder in das Fahrzeug einsteigt, das Zugreifen auf Präferenzdaten und geografische Standortdaten des Passagiers und das Auswählen sensorischer Inhalte zur Bereitstellung für den Passagier im Fahrzeug basierend auf den Präferenzdaten und geografischen Standortdaten. Dazu gehören auch Methoden und Geräte zum Produzieren von Videos, die auf ein Präferenzprofil einer Person oder Kohorte zugeschnitten sind, umfassend das Verknüpfen jedes der gespeicherten Videoclips mit einem Satz charakteristischer Parameter, die sich auf vom Benutzer wahrnehmbare Eigenschaften beziehen, das Empfangen von Benutzerprofildaten, die sich auf die Person oder Kohorte beziehen, das Auswählen von Videoclips aus der Datenstruktur zumindest teilweise basierend auf den Benutzerprofildaten und das automatische Produzieren eines Videos, das die bevorzugten Videoclips enthält.

Die US 2017/0136842 A1 beschreibt, dass ein oder mehrere Federungssysteme eines Fahrzeugs verwendet werden, um die Reisekrankheit zu lindern, indem die Bewegung in einem oder mehreren Frequenzbereichen begrenzt wird. Es kann eine aktive Federung in die Architektur eines autonomen Fahrzeugs integriert werden, oder das aktive Federungssystem eines Fahrzeugs kann verwendet werden, um Bewegung in einem Fahrzeug hervorzurufen.

Eine der Erfindung zugrundeliegende Aufgabe ist das Verbessern einer immersiven Erfahrung beim Spielen von Computerspielen im Kraftfahrzeug.

Die gestellte Aufgabe wird jeweils durch das erfindungsgemäße Verfahren und die erfindungsgemäßen Vorrichtungen gemäß den nebengeordneten Ansprüchen gelöst. Vorteilhafte Weiterbildungen sind durch die Unteransprüche gegeben.

Die Erfindung basiert auf der Idee, über das Steuern von Aktuatoren bei einer Benutzung von Computerspielen im Kraftfahrzeug hinaus zunächst den Benutzer des Computerspiels zu charakterisieren und anhand einer Spieler-Kategorie, in die ein Charakter des Benutzers eingeordnet werden kann, eine oder mehrere Aktuatoreinrichtungen des Kraftfahrzeugs charakterspezifisch zu steuern. Dadurch erfahren unterschiedliche Benutzer von Computerspielen in dem Kraftfahrzeug nicht alle das gleiche immersive Erlebnis, sondern durch die individuelle Steuerung einer oder mehrerer Aktuatoreinrichtungen erfährt jeder Benutzer von Computerspielen eine auf seine Persönlichkeit zugeschnittene Aktuatorsteuerung. Es wird also, mit anderen Worten, bei der Steuerung von Aktuatoren für ein immersives Erlebnis im Kraftfahrzeug beim Spielen von Computerspielen ein Spielertyp - also ein "Gamer-Typ" - berücksichtigt.

Unter einer Aktuatoreinrichtung wird ein Gerät oder ein Geräteverbund mit mindestens einem Aktuator oder Aktor verstanden, also mit mindestens einem Antriebselement, das/der ein elektrisches Signal oder elektrische Signale in mechanische Bewegung oder eine andere physikalische Größe umsetzt. Eine Aktuatoreinrichtung kann vorzugsweise als Infotainmentsystem, Klimaanlage, Beleuchtungsanlage, Beduftungsanlage oder Beduftungsgerät, Sitzmechanik oder Sitzmassagemechanik, oder Fahrwerk ausgestaltet sein.

Bei einer Ausgestaltung der Aktuatoreinrichtung als Infotainmentsystem kann zum Beispiel in Abhängigkeit von dem Spielertyp eine Musik ausgewählt und/oder gesteuert abgespielt werden; bei der Ausgestaltung als Klimaanlage kann zum Beispiel ein Luftstrom schwächer oder stärker gestellt werden, zum Beispiel je nachdem, ob der Spieler ein ruhiger oder sehr agiler Spielertyp ist; ein Licht-Ambiente kann Spieler-spezifisch eingestellt werden, sowie zum Beispiel eine Sitzmassage, und vorzugsweise kann eine solche Sitzmassage im Takt einer abgespielten Musik während des Computerspiels gesteuert werden. Umfasst eine der gesteuerten Aktuatoreinrichtungen ein aktives Fahrwerk, kann dieses in Abhängigkeit vom Spielertyp stärker oder schwächer haptische Rückmeldungen geben, das heißt der Stärkegrad einer haptischen Rückmeldung kann an den Spielertyp angepasst werden.

Das erfindungsgemäße Verfahren zum Steuern mindestens einer Aktuatoreinrichtung eines Kraftfahrzeugs kann auch als Verfahren zum Spieler-spezifischen Einstellen von Aktoren des Kraftfahrzeugs oder als Verfahren zum Konfigurieren von Aktoren bezeichnet werden. Das Verfahren wird durch eine Steuervorrichtung durchgeführt.

Unter einer Steuervorrichtung wird ein Gerät, eine Gerätegruppe oder Gerätekomponente verstanden, das/die dazu ausgestaltet ist, Signale zu empfangen, diese auszuwerten, und Steuersignale zu erzeugen und diese an andere Geräte oder Gerätekomponenten zu übertragen. Hierzu kann die Steuervorrichtung zum Beispiel als Steuergerät oder Steuerchip ausgestaltet sein, und vorzugsweise ein Empfangsmodul, mindestens einen Mikroprozessor und ein Sendemodul umfassen.

Die Steuervorrichtung stellt mindestens einen im Kraftfahrzeug befindlichen Benutzer fest, also mindestens einen Benutzer des Kraftfahrzeugs. Der Benutzer kann dabei auch als der Benutzer des Kraftfahrzeugs bezeichnet werden, und/oder als Benutzer von Computerspielen, oder als "Spieler".

Die Steuereinrichtung stellt mindestens einen Verhaltens- und/oder Körperspracheparameter des mindestens eines festgestellten Benutzers fest. Der Verhaltens- und/oder Körperspracheparameter kann zum Beispiel die Gesichtsmimik oder die Körperhaltung des Benutzers sein. Hierzu kann die Steuervorrichtung zum Beispiel über ein Kamerasystem des Kraftfahrzeugs den Benutzer beobachten, und anhand von Bildanalyse das Verhalten und/oder die Körpersprache analysieren. Alternativ oder zusätzlich kann die Steuervorrichtung, hat sich der Benutzer zum Beispiel mit einem Benutzerprofil im Bordsystem des Kraftfahrzeugs eingeloggt, anhand des Profils dort hinterlegte Eigenschaften des Benutzers abrufen, zum Beispiel die Eigenschaft des Benutzers "introvertiert", "extrovertiert" oder "professioneller Spieler".

Anhand des mindestens einen festgestellten Verhaltens- und/oder Körperspracheparameter ordnet die Steuervorrichtung den festgestellten Benutzer einer von mehreren vorgegebenen Spieler-Kategorien zu.

So kann zum Beispiel ein "Profi-Spieler" daran erkannt werden, dass er beim Starten eines Computerspiels einen sehr professionellen Gesichtsausdruck hat, der Steuervorrichtung Informationen vorliegen, dass der Benutzer regelmäßig Computerspiele spielt, oder die Steuervorrichtung kann über zum Beispiel einen Bildschirm des Kraftfahrzeugs vor dem Starten des Computerspiels abfragen, ob sich der Benutzer zum Beispiel als Anfänger oder Profi bezeichnet. Der beispielhaften Spieler-Kategorie "kommunikativer Spieler" kann der festgestellte Benutzer zugeordnet werden, falls die Steuervorrichtung zum Beispiel über eine Mikrofonaufnahme eines Mikrofons des Kraftfahrzeugs feststellt, dass der Benutzer während einer Fahrt viel spricht, oder dass der Benutzer bei mindestens zwei Social Media-Plattformen registriert ist. Ein "extrovertierter Spieler" kann zum Beispiel über Gestenerkennung anhand seiner ausladenden Gesten erkannt werden, ein Spieler der Kategorie "pay-to-win-Spieler" zum Beispiel anhand der Steuervorrichtung vorliegenden Informationen zu Abonnements von App-in-Käufen von Computerspielen, und ein Spieler der beispielhaften Spieler-Kategorie "isolierter Spieler" kann zum Beispiel daran erkannt werden, dass dieser Benutzer sich häufig in das parkende Kraftfahrzeug zurückzieht, um ein Computerspiel zu spielen. Weitere bevorzugte Spieler-Kategorien sind die Kategorien "aggressiver Spieler", "Zeitvergesser", "Anfänger" und "Zeitvertreiber".

Anhand der Spieler-Kategorie, der der mindestens eine festgestellte Benutzer zugeordnet ist, ermittelt die Steuervorrichtung ein der benutzerspezifischen Spieler-Kategorie zugeordnetes Set an Aktuatorparametern für mindestens eine Aktuatoreinrichtung des Kraftfahrzeugs. Das Set kann zum Beispiel einen Parameter zum Einstellen der Temperatur durch die Klimaanlage umfassen; einen Parameter, der eine Stärke und eine Frequenz einer Sitzmassage festlegt und an eine Kraftfahrzeug-Sitzmechanik gerichtet ist; und/oder ein Beleuchtungsparameter, der einer Lichtanlage des Kraftfahrzeugs zum Beispiel Beleuchtungsfarbe und/oder Beleuchtungsstärke für ein benutzerspezifisches Lichtambiente während des Computerspiels vorgibt.

Im einfachsten Fall kann das Set an Aktuatorparametern nur einen Aktuatorparameter und nur eine zu steuernde Aktuatoreinrichtung des Kraftfahrzeugs beschreiben.

Bei Feststellen eines Startens eines Computerspiels, also bei Feststellen eines Aktivierens des Computerspiels im Kraftfahrzeug erzeugt die Steuervorrichtung ein Aktuatorsignal, welches das ermittelte Set an Aktuatorparametern beschreibt, und überträgt dieses an die mindestens eine Aktuatoreinrichtung.

Es ergeben sich die oben genannten Vorteile. Durch das erfindungsgemäße Verfahren wird eine realistischere Umgebung im Kraftfahrzeug bereitgestellt, wodurch die Benutzererfahrung beim Spielen von Computerspielen sehr viel besser wird.

Vorzugsweise kann das Feststellen des Benutzers ein Erkennen des Benutzers umfassen, wobei das Steuern der Aktuatoreinrichtung oder der Aktuatoreinrichtungen personenspezifisch und dadurch präziser abgestimmt wird.

In einer Weiterbildung ist vorgesehen, dass die Steuervorrichtung zum Erkennen des Benutzers ein benutzerspezifisches mobiles Endgerät im oder am Kraftfahrzeug feststellt und über eine Datenkommunikationsverbindung mit dem mobilen Endgerät benutzerspezifische Daten auf dem mobilen Endgerät empfängt, die den Benutzer identifizieren. Das mobile Endgerät kann zum Beispiel als Smartphone, Laptop oder Tablet-PC ausgestaltet sein. Die Datenkommunikationsverbindung kann vorzugsweise eine drahtlose Datenkommunikationsverbindung sein, also zum Beispiel eine WLAN-Verbindung oder eine Bluetooth-Verbindung. Die benutzerspezifischen Daten, die auf dem mobilen Endgerät abgelegt sind, können zum Beispiel den Namen des Benutzers, Charakteristika des Benutzers und/oder eine andere geeignete Information zum Zuordnen und Identifizieren des Benutzers umfassen.

Zusätzlich oder alternativ kann die Steuervorrichtung zum Erkennen des Benutzers den Benutzer anhand eines bereitgestellten Benutzerprofils erkennen, zum Beispiel eines Benutzerprofils des Kraftfahrzeugs oder des mobilen Endgeräts, in das sich der Benutzer eingeloggt hat.

Zusätzlich oder alternativ kann die Steuervorrichtung zum Erkennen des Benutzers aus einer Sensoreinrichtung, vorzugsweise einer Sensoreinrichtung des Kraftfahrzeugs, ein Benutzeridentifikationssignal empfangen und den Benutzer anhand des empfangenen Benutzeridentifikationssignals erkennen. Hierzu kann die Steuervorrichtung aus der Sensoreinrichtung zum Beispiel ein Foto des Gesichts des Benutzers empfangen und durch eine Software zur Gesichtserkennung den Benutzer erkennen.

Unter einer Sensoreinrichtung wird ein Gerät, eine Gerätegruppe oder eine Gerätekomponente verstanden, das/die mindestens einen Sensor zum Erfassen einer Eigenschaft, eines Gegenstands und/oder einer Person aufweist. Vorzugsweise kann die Sensoreinrichtung mindestens eine Kamera des Kraftfahrzeugs umfassen, einen Fingerabdrucksensor und/oder mindestens ein Mikrofon und eine Software zur Sprachanalyse.

Durch das Erkennen des Benutzers durch eine der beschriebenen Maßnahmen kann die Zuordnung in Spieler-Kategorien sehr viel präziser erfolgen. Dadurch wird auch das immersive Erlebnis wesentlich besser.

Alternativ zu der genannten Benutzererkennung kann die Steuervorrichtung eine Abfrage vor oder beim Abspielen eines Computerspiels durchführen, bei der der Benutzer zum Beispiel seinen Namen eingeben kann und/oder einen Knopf drücken kann.

Optional kann die Steuervorrichtung über eine Datenkommunikationsverbindung mit dem mobilen Endgerät des Benutzers mindestens ein Computerspiel, das auf dem mobilen Endgerät abgelegt ist, feststellen, und anhand des abgelegten Computerspiels den festgestellten Benutzer einer Spieler-Kategorie zuordnen. Hat der Benutzer auf seinem mobilen Endgerät zum Beispiel viele Sandbox-Spiele, also viele Computerspiele mit hoher spielerischer Freiheit und großem kreativen Freiraum, kann die Steuervorrichtung zum Beispiel die Spieler-Kategorie "Zeitvertreiber" feststellen. Hat der Benutzer viele so genannte "Ego-Shooter"-Spiele auf seinem mobilen Endgerät abgelegt, kann die Steuervorrichtung für diesen festgestellten Benutzer zum Beispiel die Spieler-Kategorie "aggressiver Spieler" zuordnen. Auch hierdurch wird die Zuordnung sehr viel präziser, und dadurch das immersive Erlebnis sehr viel besser.

In einer weiteren bevorzugten Ausführungsform des erfindungsgemäßen Verfahrens kann die Steuervorrichtung den Benutzer sitzplatzspezifisch feststellen. Hierzu kann die Steuervorrichtung zum Beispiel anhand von Kameraaufnahmen und/oder Drucksensoren in den Kraftfahrzeugsitzen feststellen, wo der festgestellte Benutzer sitzt. Entsprechend kann das Set an Aktuatorparametern nur für diesen Sitzplatz spezifisch bereitgestellt werden. Dies ist insbesondere dann sehr vorteilhaft, wenn andere Insassen nicht an dem immersiven Erlebnis des das Computerspiel spielenden Insassen teilhaben wollen, oder wenn mehrere unterschiedliche Spielertypen im Kraftfahrzeug spielen.

In einer Weiterbildung kann dann entsprechend bei einer Vielzahl von Benutzern im Kraftfahrzeug sitzplatzspezifisch eine oder mehrere Aktuatoreinrichtungen gesteuert werden, so dass unterschiedliche Spielertypen gleichzeitig spielen können und jeder sein besonders persönliches immersives Erlebnis hat. Bei dieser Weiterbildung kann die Steuervorrichtung mindestens zwei Benutzer im Kraftfahrzeug sitzplatzspezifisch feststellen, jeden der festgestellten Benutzer einer Spieler-Kategorie zuordnen, und für jeden der festgestellten Benutzer ein Aktuatorsignal zum sitzplatzspezifischen Steuern jeweils mindestens einer Aktuatoreinrichtung erzeugen. Die Aktuatorsignale können sich dann also unterscheiden, so dass zum Beispiel für jeden der Benutzer unterschiedliche Aktuatoren und unterschiedliche Aktuatorparameter eingestellt werden können.

In einer weiteren Ausführungsform des erfindungsgemäßen Verfahrens kann eine Vorfilterung der Spiele erfolgen, so dass der Benutzer zum Spielen nur aus einer für ihn spezifisch zusammengestellten Auswahl ein Spiel auswählen können. Hierzu kann die Steuervorrichtung anhand der Spieler-Kategorie, der der festgestellte Benutzer zugeordnet ist, aus einer Mehrzahl an bereitgestellten Computerspielen mindestens eines als für den festgestellten Benutzer geeignetes Computerspiel zur Auswahl bereitgestellt werden. Bei einer Vorfilterung der Spiele können optional auf einem Bildschirm des Kraftfahrzeugs die ausgewählten Spiele durch jeweils ein farbiges Icon repräsentiert werden, und optional können die Icons für andere, aussortierte Spiele ausgegraut dargestellt werden.

Als Alternative zur vorausgegangenen Ausführungsform des erfindungsgemäßen Verfahrens kann vorgesehen sein, dass die Steuervorrichtung mindestens ein Computerspiel einer anderen Spieler-Kategorie als derjenigen, der der festgestellte Benutzer zugeordnet ist, dem festgestellten Benutzer zur Auswahl bereitstellt. Hierdurch kann der Benutzer etwas Neues ausprobieren und durch die entsprechend andere Steuerung von Aktuatoreinrichtungen kann der Spieler Neues ausprobieren und erleben. Gehört der festgestellte Benutzer zum Beispiel zur Spieler-Kategorie "aggressiver Spieler" und spielt eigentlich nur "Ego-Shooter", kann durch den Anreiz, stattdessen ein Strategiespiel zu spielen, dem Benutzer ermöglicht werden, auf ein entspannenderes Spielgenre umzusteigen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehört auch die Steuervorrichtung für das Kraftfahrzeug. Die Steuervorrichtung kann eine Datenverarbeitungsvorrichtung oder eine Prozessoreinrichtung (Prozessorschaltung) aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Als Mikroprozessor kann insbesondere jeweils eine CPU (Central Processing Unit), eine GPU (Graphical Processing Unit) oder eine NPU (Neural Processing Unit) verwendet werden. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann z. B. auf zumindest einer Schaltungsplatine und/oder auf zumindest einem SoC (System on Chip) basieren.

Das erfindungsgemäße Kraftfahrzeug ist bevorzugt als Kraftwagen, insbesondere als Personenkraftwagen oder Lastkraftwagen, oder als Personenbus oder Motorrad ausgestaltet, und weist eine Ausführungsform der erfindungsgemäßen Steuervorrichtung auf.

Als eine weitere Lösung umfasst die Erfindung auch ein computerlesbares Speichermedium, umfassend Programmcode, der bei der Ausführung durch einen Computer oder einen Computerverbund diesen veranlasst, eine Ausführungsform des erfindungsgemäßen Verfahrens auszuführen. Das Speichermedium kann zumindest teilweise als ein nicht-flüchtiger Datenspeicher (z. B. als eine Flash-Speicher und/oder als SSD - solid state drive) und/oder zumindest teilweise als ein flüchtiger Datenspeicher (z. B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z. B. C) und/oder als Programmskript (z. B. Python) bereitgestellt sein. Das computerlesbare Speichermedium kann alternativ durch ein Signal mit computerlesbaren Daten realisiert sein, z. B. ein zeitvariantes Spannungssignal und/oder ein Funksignal.

Zu der Erfindung gehören auch Weiterbildungen der erfindungsgemäßen Steuervorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuervorrichtung und des erfindungsgemäßen Kraftfahrzeugs hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

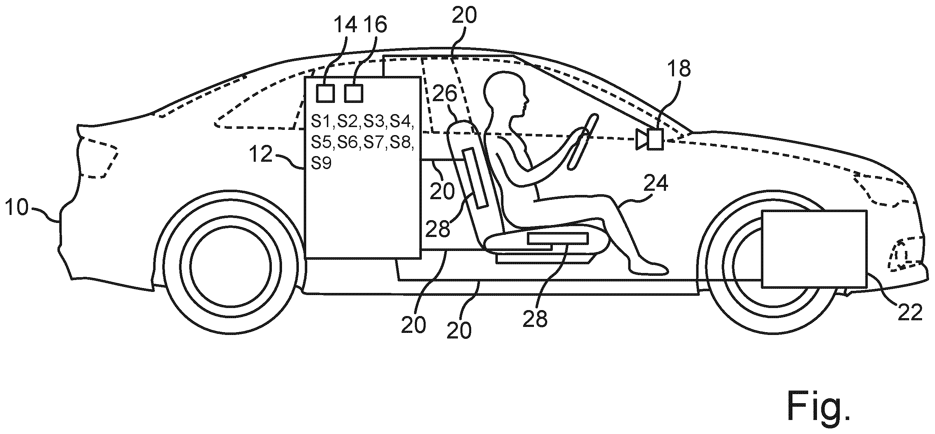

Im Folgenden sind Ausführungsbeispiele der Erfindung beschrieben. Hierzu zeigt die einzige Figur ("Fig.") eine schematische Darstellung zu Ausführungsbeispielen des erfindungsgemäßen Verfahrens und der erfindungsgemäßen Vorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

Die Figur zeigt schematisch Ausführungsbeispiele des erfindungsgemäßen Verfahrens und der erfindungsgemäßen Vorrichtungen. Hierzu zeigt die Figur ein Kraftfahrzeug 10, zum Beispiel einen Personenkraftwagen, mit einer Steuervorrichtung 12, die zum Beispiel als Steuerchip oder Steuergerät ausgestaltet sein kann. Die Steuervorrichtung 12 kann vorzugsweise mindestens eine Prozessoreinrichtung 14 und/oder mindestens einen Datenspeicher 16 aufweisen.

Die Steuervorrichtung 12 kommuniziert mit einer als beispielhaften Sensor gezeigten Kamera 18 über eine Datenkommunikationsverbindung 20, die zum Beispiel als Daten-BUS des Kraftfahrzeugs 10 ausgestaltet sein kann, oder die zum Beispiel eine drahtlose Datenkommunikationsverbindung sein kann. Ebenso kann die Steuervorrichtung 12 über eine Datenkommunikationsverbindung 20 zum Beispiel mit einem Infotainmentsystem 22 des Kraftfahrzeugs kommunizieren, welches optional einen Bildschirm zum Ausgeben von Benutzerabfragen und/oder Computerspielen aufweisen kann. Alternativ kann zum Ausgeben des Computerspiels zum Beispiel eine Datenbrille verwendet werden.

Im Beispiel der Figur befindet sich ein Benutzer 24 im Kraftfahrzeug auf einem Kraftfahrzeugsitz 26, zum Beispiel auf dem Beifahrersitz. Als beispielhafte Aktuatoreinrichtung 28 kann der Kraftfahrzeugsitz in Rückenlehne und/oder im Sitzpolster eine Mechanik und Elektronik zum Durchführen einer Sitzmassage aufweisen. Vorzugsweise kann das Kraftfahrzeug 10 noch weitere Aktuatoreinrichtungen 28 aufweisen, die spielerspezifisch gesteuert werden können. Beispiele hierfür wurden bereits weiter oben genannt.

Bei einer optionalen Kommunikation mit einem mobilen Endgerät (in der Figur nicht gezeigt) des Benutzers 24 kann die Datenkommunikationsverbindung 20 vorzugsweise eine drahtlos sein, zum Beispiel eine Bluetooth- oder WLAN-Verbindung.

Im Beispiel der Figur kann die Steuervorrichtung 12 in S1 zum Beispiel über ein Kamerabild des Benutzers 24 und eine Gesichtserkennungsanalyse den Benutzer als Halter des Kraftfahrzeugs 10 feststellen. Die Steuervorrichtung 12 dabei zum Beispiel feststellen, dass das entsprechende Signal aus einer Kamera 18 kommt, die nur den Beifahrersitz filmt, und entsprechend kann der Benutzer 24 sitzplatzspezifisch für den Beifahrersitz festgestellt werden (S1). Befindet sich ein weiterer Benutzer (in der Fig. nicht gezeigt) auf einem anderen Sitzplatz, kann auch dieser sitzplatzspezifisch festgestellt werden (S1).

Die Kamera 18 kann zum Beispiel ein Video des festgestellten Benutzers 24 aufnehmen und ein entsprechendes Signal an die Steuervorrichtung 12 übertragen. Anhand einer Analyse der Körperhaltung und/oder Körperbewegungen, sowie der Gesichtsmimik kann die Steuervorrichtung 12, vorzugsweise mit Hilfe einer künstlichen Intelligenz, also einem neuronalen Netzwerk, mindestens einen Verhaltens- und/oder Körperspracheparameter feststellen (S2), und zum Beispiel durch eine Analyse als Gesichtsmimik einen angespannten Gesichtsausdruck und als Körpersprache oder Körperbewegung ausladende, extrovertierte Bewegungen feststellen.

Alternativ oder zusätzlich kann die Steuervorrichtung 12 zum Erkennen des Benutzers 24 zum Beispiel aus einem mobilen Endgerät eine Seriennummer des mobilen Endgeräts oder eine Information zur Person des Benutzers 24 feststellen. Hierzu kann die Steuervorrichtung 12 zu dem mobilen Endgerät eine Datenkommunikationsverbindung aufbauen, zum Beispiel eine WLAN-Verbindung, das mobile Endgerät als solches feststellen (S3) oder als mobiles Endgerät des Benutzers 24 feststellen (S3), und die entsprechenden Daten zu dem Benutzer 24 empfangen (S4). Diese Daten können zum Beispiel den Namen des Benutzers 24 beschreiben. Alternativ kann die Steuervorrichtung 12 zum Beispiel ein Benutzerprofil in einem Bordsystem des Kraftfahrzeugs 10 auslesen, falls dieser sich eingeloggt hat.

Der Benutzer 24 des Beispiels der Figur kann zum Beispiel aufgrund seiner ausladenden Körperbewegungen und dem angespannten Gesichtsausdruck in die Spieler-Kategorie "aggressiver Spieler" oder "extrovertierter Spieler" eingeordnet werden, das heißt dieser Spieler-Kategorie zugeordnet werden (S5).

Alternativ oder zusätzlich kann die Zuordnung S5 über eine Computerspielsammlung im Bordsystem des Kraftfahrzeugs 10 oder auf dem mobilen Endgerät des Benutzers 24 erfolgen. Im Beispiel der Figur kann zum Beispiel eine Spielesammlung mit vielen sogenannten "Ego-Shootern" zu der Zuordnung S5 in die Spieler-Kategorie "extrovertierter Spieler" erfolgen.

Im Ausführungsbeispiel kann für die Spieler-Kategorie "extrovertierter Spieler" zum Beispiel vorgesehen sein, dass eine Lichtanlage des Kraftfahrzeugs 10 zum Beispiel dahingehend gesteuert wird, dass das Licht sehr hell ist und in einer hohen Frequenz flackert. Die Motorik der Sitzmassagefunktion der in der Figur beispielhaft gezeigten Aktuatoreinrichtung 28 kann für diese Spieler-Kategorie zum Beispiel dahingehend angesteuert werden, dass in schnellen Zyklen starke, schnell wechselnde Druckausübungen der Rückenlehne und der Sitzfläche auf den Benutzer 24 ausgeübt werden. Ist für die Spieler-Kategorie des Beispiels auch vorgesehen, dass das Infotainmentsystem 22 eine vorbestimmte Musik abspielt oder ist eine Information hinterlegt, welche Musik zu einem Computerspiel abgespielt wird, kann diese Massagefunktion derart gesteuert werden, dass die Sitzmassage im Takt der abgespielten Musik durchgeführt wird. Das entsprechende Kategorie-spezifische Set an Aktuatorparametern ermittelt die Steuervorrichtung in S6.

Zum Feststellen eines Startens oder Aktivierens eines Computerspiels kann die Steuervorrichtung 12 entweder selbst das Starten des Computerspiels initiieren, oder eine entsprechende Information aus dem Bordsystem des Kraftfahrzeugs 10 empfangen. Die Steuervorrichtung 12 erzeugt in S7 ein Aktuatorsignal, das für die in der Figur gezeigte Aktuatoreinrichtung 28 und zum Beispiel auch für eine Lichtanlage mit den entsprechenden Aktuatorparametern beschreibt, und die Steuervorrichtung überträgt dieses in S8 an die jeweilige Aktuatoreinrichtung 28.

Bei mehreren Benutzern 24 kann sitzplatzspezifisch ein benutzerspezifisches Aktuatorsignal erzeugt werden (S7).

Optional kann nur ein Anteil an Computerspielen oder nur ein Computerspiel aus einer Computerspielsammlung zur Auswahl dem festgestellten Benutzer bereitgestellt werden (S9). Die Auswahl kann anhand der Spieler-Kategorie des festgestellten Benutzers 24 erfolgen, oder es wird dem festgestellten Benutzer 24 ein Computerspiel oder mehrere Computerspiele aus einer anderen Spieler-Kategorie vorgeschlagen, um ein neues Computerspiel-Genre auszuprobieren. Die Computerspielsammlung kann eine des mobilen Endgeräts des Benutzers 24 sein, oder eine Computerspielsammlung, die in dem Datenspeicher 16 der Steuervorrichtung 12 oder in einem anderen Datenspeicher des Kraftfahrzeugs 10 abgelegt sein kann.

Insgesamt zeigen die Beispiele, wie ein Verfahren und eine Vorrichtung zur Erkennung von Gamertypen im Fahrzeuginnenraum und entsprechender Anpassung von Gaming bereitgestellt werden kann.

Der Kern der Idee ist, dass vorzugsweise wenn der Benutzer 24 Gaming aktiviert (also ein Spiel startet), über zum Beispiel eine manuelle oder automatische Abfrage der Gamertyp ermittelt wird (S5) und das Kraftfahrzeug 10 sich gesamthaft darauf einstellt.

Welcher Gamertyp (also welcher Spielertyp) sich im Kraftfahrzeug 10 befindet, kann in einem weiteren Ausführungsbeispiel über einen oder mehrere verschiedene Wege ermittelt werden (S5) , vorzugsweise:
- Abfrage des persönlichen Devices; und/oder
- Manuelle Abfrage beim ersten Spiel; und/oder
- Automatische Erkennung durch eine Spielbeobachtung durch Sensorik im Innenraum.

Je nach Gamertyp können dann vorzugsweise folgende Einstellungen erfolgen:
- Nur Spiele (im Kraftfahrzeug 10 integriert) anbieten, die dem Gamertyp entsprechen (Vorfilterung), und/oder
- Entsprechende Einstellungen an den Aktoren im Innenraum vornehmen; zum Beispiel kann bei einem "Hardcore"-Gamer entsprechend das Licht greller und aktiver dargestellt und die Musik lauter gestellt werden.

Weitere Differenzierungen der Einstellungen sind denkbar. Dieses Feature kann für autonome und/oder nichtautonome Kraftfahrzeuge 10 genutzt werden. Das kann sowohl für den Front- als auch für den Fondbereich Verwendung finden. Diese Funktion kann optional einstellbar vom Benutzer 24 angewählt werden.

Vorteilhaft ergibt sich unter anderem, dass durch diese Vorrichtung und/oder dieses Verfahren der Benutzer 24 einen zusätzlichen Nutzen bei Verwendung von Gaming in seinem Kraftfahrzeug 10 hat.

In einer weiteren bevorzugten technischen Umsetzung kann das Kraftfahrzeug 10 mit einem Steuergerät als Steuervorrichtung 12 mit entsprechender Software für Gaming ausgestattet sein. Es kann eine Auswertung der Erkennung und elektronischer Anzeige erfolgen, eine Verarbeitung der Daten und einer entsprechenden Ausgabe und Einstellung von Gaming, und/oder eine Informationsweitergabe an den Fahrzeuginsassen via zum Beispiel Sprache und/oder HMI, also über zum Beispiel Sprache und/oder ein Bediengerät mit einer Benutzerschnittstelle.

## Patentansprüche

1. Verfahren zum Steuern mindestens einer Aktuatoreinrichtung (28) eines Kraftfahrzeugs (10), wobei eine Steuervorrichtung (12):
- einen im Kraftfahrzeug (10) befindlichen Benutzer (24) feststellt (S1),
- mindestens einen Verhaltens- und/oder Körperspracheparameter des mindestens einen festgestellten Benutzers (24) feststellt (S2),
- den mindestens einen festgestellten Benutzer (24) anhand des mindestens einen festgestellten Verhaltens- und/oder Körperspracheparameter einer von mehreren vorgegebenen Spieler-Kategorien zuordnet (S5),
- anhand der Spieler-Kategorie des mindestens einen festgestellten Benutzers (24) ein der benutzerspezifischen Spieler-Kategorie zugeordnetes Set an Aktuatorparametern für mindestens eine Aktuatoreinrichtung (28) des Kraftfahrzeugs (10) ermittelt (S6),
- bei Feststellen eines Startens eines Computerspiels im Kraftfahrzeug (10) ein Aktuatorsignal erzeugt (S7), das das ermittelte Set an Aktuatorparametern beschreibt, und
- das erzeugte Aktuatorsignal an die mindestens eine Aktuatoreinrichtung (28) überträgt (S8).

2. Verfahren nach Anspruch 1, wobei das Feststellen des Benutzers (24) (S1) ein Erkennen des Benutzers (24) umfasst; vorzugsweise wobei die Steuervorrichtung (12) zum Erkennen des Benutzers (24):
- ein benutzerspezifisches mobiles Endgerät im oder am Kraftfahrzeug (10) feststellt (S3) und über eine Datenkommunikationsverbindung (20) mit dem mobilen Endgerät benutzerspezifische Daten auf dem mobilen Endgerät empfängt (S4), die den Benutzer (24) identifizieren; und/oder
- den Benutzer (24) anhand eines bereitgestellten Benutzerprofils erkennt (S1); und/oder
- aus einer Sensoreinrichtung ein Benutzeridentifikationssignal empfängt und den Benutzer (24) anhand des empfangenen Benutzeridentifikationssignals erkennt (S1).

3. Verfahren nach einem der vorhergehenden Ansprüche, wobei die Steuervorrichtung (12) über eine Datenkommunikationsverbindung (20) mit dem mobilen Endgerät des Benutzers (24) mindestens ein Computerspiel, das auf dem mobilen Endgerät abgelegt ist, feststellt, und anhand des abgelegten Computerspiels den festgestellten Benutzer (24) der Spieler-Kategorie zuordnet (S5).

4. Verfahren nach einem der vorhergehenden Ansprüche, wobei die Steuervorrichtung (12) den Benutzer (24) sitzplatzspezifisch feststellt (S1).

5. Verfahren nach Anspruch 4, wobei die Steuervorrichtung (12) mindestens zwei Benutzer (24) im Kraftfahrzeug (10) sitzplatzspezifisch feststellt (S1), jeden der festgestellten Benutzer (24) einer Spieler-Kategorie zuordnet (S5), und für jeden der festgestellten Benutzer (24) ein Aktuatorsignal zum sitzplatzspezifischen Steuern jeweils mindestens einer Aktuatoreinrichtung (28) erzeugt (S7).

6. Verfahren nach einem der vorhergehenden Ansprüche, wobei die Steuervorrichtung (12) anhand der Spieler-Kategorie, der der festgestellte Benutzer (24) zugeordnet ist, aus einer Mehrzahl an bereitgestellten Computerspielen mindestens eines als für den festgestellten Benutzer (24) geeignetes Computerspiel zur Auswahl bereitstellt (S9).

7. Verfahren nach einem der Ansprüche 1 bis 5, wobei die Steuervorrichtung (12) mindestens ein Computerspiel einer anderen Spieler-Kategorie als derjenigen, der der festgestellte Benutzer (24) zugeordnet ist, dem festgestellten Benutzer (24) zur Auswahl bereitstellt (S9).

8. Verfahren nach einem der vorhergehenden Ansprüche, wobei die Aktuatoreinrichtung (28) ausgestaltet ist: als Infotainmentsystem (22), Klimaanlage, Beleuchtung, Beduftungsanlage, Sitzmechanik oder Sitzmassagemechanik, oder als Fahrwerk.

9. Steuervorrichtung (12), die dazu eingerichtet ist, ein Verfahren nach einem der vorhergehenden Ansprüche durchzuführen.

10. Kraftfahrzeug (10), aufweisend eine Steuervorrichtung (12) nach Anspruch 9.
